# EUROPEAN PATENT APPLICATION

(11) **EP 4 345 333 A1**
(43) Date of publication of application: **03.04.2024**
(21) Application number: 22197972.7
(22) Date of filing: 27.09.2022
(51) Int. Cl.: F16D 55/226, F16D 65/092, F16D 65/097, F16D 69/00

(54) **DISK BRAKE**

(71) Applicant: KNORR-BREMSE Systeme für Nutzfahrzeuge GmbH, 80809 München (DE)
(72) Inventor: ADAMCZYK, Philipp, 82347 Bernried (DE); BLESSING, Michael, 80687 München (DE); GYÖRKE, Zsombor, 8360 Keszthely (HU); HEIGL, Korbinian, 80939 München (DE); HÖS, Levente, 1047 Budapest (HU); HOLLOSI, Mate, 1097 Budapest (HU); KLINGNER, Matthias, 82276 Adelshofen (DE); KOKREHEL, Csaba, 1119 Budapest (HU); Krüger, Sven Philip, 81476 München (DE); MONORI, Gyula, 6065 Lakitelek (HU); NAKAMURA, Tatsuro, 1027 Budapest (HU); PESCHEL, Michael, 82296 Schöngeising (DE); TOTH, Janos, 6000 Kecskemét (HU); TOTH-KATONA, Tamas, 1039 Budapest (HU); SCHÖFBERGER, Tobias, 84048 Mainburg (DE); SZABO, Janos, 1101 Budapest (HU); KRETZ, Philipp, 80939 München (DE)

(57) **Abstract**

A disc brake (1) comprises a brake disc (2), two brake pads (3) respectively comprising a back plate (4) and a lining material (5), each brake pad (3) comprising an incoming side (Si) and an outgoing side (Sₒ), and a clamping unit comprising the brake pads (3) and a caliper (8) comprising tension struts (9) connecting a portion (10) where one of the two brake pads (3) is supported with another portion where the other one of the two brake pads (3) is supported, wherein at least one of the tensions struts (9), of the portions (10), and of the two brake pads (3) is configured to provide its/their deformation during braking such that a point of application of a resulting counterforce (F_{Res}) from the brake disc (2) to the brake pads (3) is located closer to the incoming side (Si) than to the outgoing side (Sₒ).

## Description

The invention relates to a disc brake, in particular, a disc brake for vehicles.

When using disc brakes for braking a vehicle, over time, there is wear of a brake disc and, in particular, of brake pads of the disc brake. The problem is that the wear is not uniform but there is a taper wear. The taper wear causes an undefined pressure point up to the situation where the maximum braking effect cannot be achieved anymore.

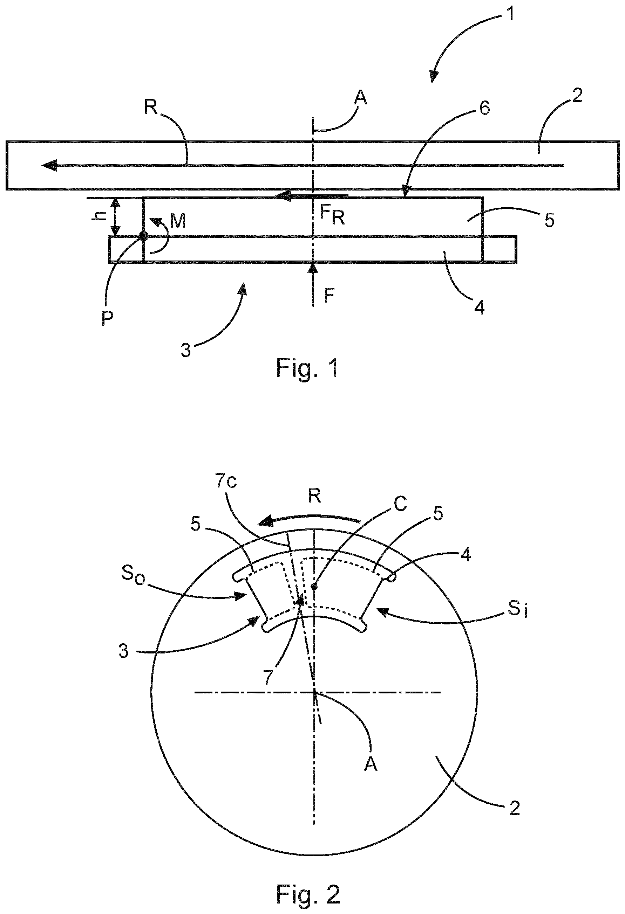

**Fig. 1** shows a principle illustration of a disc brake 1 according to the state-of-the-art. The disc brake 1 comprises a brake disc 2 and a brake pad 3 and a caliper (not shown). When the vehicle moves in a forward direction, the brake disc 2 rotates about an axis A in a direction indicated by an arrow R. The brake pad 3 comprises a back plate 4 and a lining material 5. The back plate 4 is configured to be supported on a caliper (not shown) of the disc brake 1 and the lining material 5 is attached to the back plate 4. The lining material 5 comprises a friction surface 6 which applies a friction force F_{R} to the rotating brake disc 2 when the brake pad 3 is pressed on the brake disc 2 by a braking force F. By the friction force F_{R} and a lever h between the friction surface 6 and a supporting area of the brake pad 3 where the brake pad 3 is supported on the caliper of the disc brake 1, a moment M around a point P is generated. Due to a resilience of the brake pad 3 and the caliper, this moment causes the brake pad 3 to swivel around the point P such that a wear at the end of the lining material 5 opposite to the point P is larger than the wear of the lining material 5 at the point P. This effect is called taper wear.

Nowadays, for avoiding taper wear, a location where the braking force is applied to the brake pad is selected such that it generates a compensating torque which, e.g., is shown in document EP 3245417 B1; however, for a proper effect, the location would have to be changed depending on the wear of the brake pad.

On the other hand, components of the disc brake are formed exceptionally stiff and large in order to withstand the taper wear moment and, consequently, to avoid taper wear. However, this measure increases the weight of the components of the brake and the costs.

The object underlying the invention is to eliminate the above-mentioned problem and to avoid a negative effect of the taper wear.

The object is achieved by a disc brake according to claim 1. Advantageous further developments of the invention are included in the dependent claims.

According to an aspect of the invention, a disc brake comprises a brake disc, two brake pads facing each other, the brake pads respectively comprising a back plate and a lining material, each brake pad comprising an incoming side which is a leading side of the brake pad when the brake disc rotates in the rotating direction when the vehicle moves in the forward direction and an outgoing side which is a side opposite to the incoming side Sᵢ in the rotating direction R of the brake disc, and a clamping unit comprising the brake pads and a caliper comprising tension struts connecting a portion where one of the two brake pads is supported with another portion where the other one of the two brake pads is supported , wherein at least one of the tensions struts, of the portions, and of the two brake pads is configured to provide its/their deformation during braking such that a point of application of a resulting counterforce from the brake disc to the brake pads is located closer to the incoming side than to the outgoing side.

The resulting counterforce force from the brake disc to the brake pads which is closer to the incoming side then to the outgoing side generates a compensation moment in a direction opposite to the moment causing the taper wear.

In an advantageous implementation of the disc brake, the brake disc has an axis, and the lining material comprises an inner edge facing the axis and an outer edge averted from the axis, and at least one of the two brake pads and the caliper is configured to provide its/their deformation during braking such that a point of application of a resulting counterforce from the brake disc to the brake pads is located closer to the outer edge than to the inner edge.

According to a further advantageous implementation of the disc brake, the back plate has a non-uniform thickness and the thickness towards the outgoing side is smaller than towards the incoming side.

In a further advantageous implementation of the disc brake, the tension strut closer to the incoming side has another stiffness than the tension strut closer to the outgoing side.

Due to a further advantageous implementation of the disc brake, the tension struts are made of the same material, and a cross section of the tension strut closer to the incoming side differs from the cross section of the tension strut closer to the outgoing side.

According to another advantageous implementation of the disc brake, the stiffness of the tension strut closer to the incoming side is larger than the stiffness of the tension strut closer to the outgoing side.

In a further advantageous implementation of the disc brake, the brake disc has an axis, and the lining material comprises an inner edge facing the axis and an outer edge averted from the axis, the stiffness of the respective tension strut closer to the inner edge is larger than the stiffness of the respective tension strut close to the outer edge.

In a further advantageous implementation of the disc brake, a friction surface of the lining material is configured to apply a friction force to the rotating brake disc, the lining material comprises a groove in the friction surface extending towards the back plate and, in a plane of the friction surface, having a width and a center line of the width of the groove, and the friction surface has a centroid, wherein the center line of the width of the groove is located in places other than the centroid so that it does not pass through the centroid.

In a further advantageous implementation of the disc brake, for braking, the friction surface is configured to contact the rotating brake disc, and the groove is provided in a direction perpendicular to a tangential direction of the direction of rotation of the brake disc.

According to a further advantages implementation of the disc brake, for braking, the friction surface is configured to contact the rotating brake disc, and the groove is provided in a direction parallel to a tangential direction of the direction of rotation of the brake disc.

Due to a further advantages implementation of the disc brake, the groove has a cross section of one of a concave shape and a rectangular shape, in particular, of a U-shape and a V-shape.

In a further advantages implementation of the disc brake, flanks of the V-shaped groove respectively enclose a different angle with the friction surface.

According to a further advantageous implementation of the disc brake, the groove extends up to the back plate.

In a further advantageous implementation of the disc brake, the cross-section of the groove changes in a direction along the friction surface.

Subsequently, the invention is elucidated by means of embodiments referring to the attached drawings.

In particular,
Fig. 1 shows a principle illustration of a disc brake according to the state-of-the-art;
Fig. 2 shows a principle illustration of a first embodiment of a disc brake according to the invention in direction of an axis of a brake disc;
Fig. 3 shows a principle illustration of a brake pad of the embodiment of Fig. 2 in a direction perpendicular to the axis of the brake disc;
Fig. 4 shows a principle illustration of a disc brake of a second embodiment;
Fig. 5 shows a principle illustration of a brake pad of the disc brake of the second embodiment;
Fig. 6 shows a cross-sectional view of a disc brake according to third embodiment, wherein a caliper is cut in a sectional plane including a surface of the brake disc such that tension struts are cut and there is a plan view onto one of the brake pads;
Fig. 7 shows a principle illustration of a disc brake according to a fourth embodiment;
Fig. 8 shows a principle illustration of an alternative of the disc brake of Fig. 7; and
Fig. 9 shows a principle illustration of a disc brake according to a fifth embodiment.

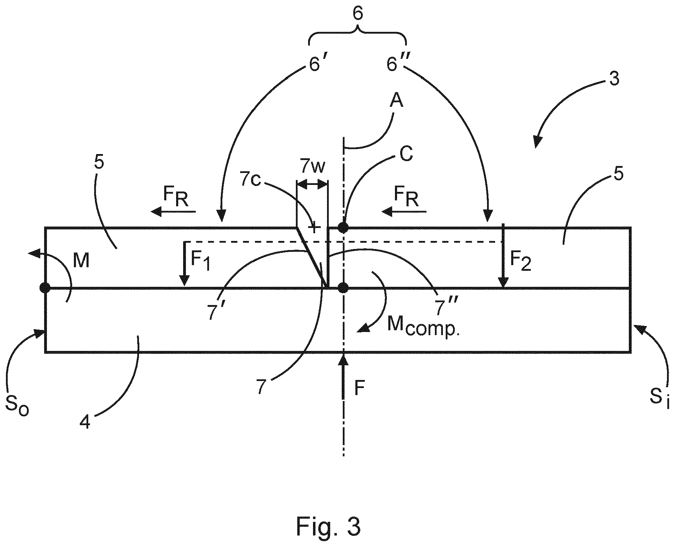

**Fig. 2** shows a principle illustration of first embodiment of a disc brake 1 according to the invention in direction of an axis A of a brake disc 2 and **Fig. 3** shows a principle illustration of a brake pad 3 of the embodiment of Fig. 2 in a direction perpendicular to the axis A of the brake disc 2.

The disc brake 1 of a vehicle comprises the brake disc 2 and the brake pad 3. When the vehicle moves in a forward direction, the brake disc 2 rotates in a direction of rotation R. Further, the brake pad 3 comprises a back plate 4 and a lining material 5. The back plate 4 is configured to be supported on a caliper (not shown in Fig. 2 and 3) of the disc brake 1 and the lining material 5 is attached to the back plate 4. The lining material 5 comprises a friction surface 6 which applies a friction force F_{R} to the rotating brake disc 2 when the brake pad 3 is pressed on the brake disc 2 by a braking force F.

Further, the lining material 5 comprises a groove 7 in the friction surface 6 extending towards the back plate 4. The groove 7 partitions the friction surface 6 into two partial friction surfaces 6', 6" of an entire friction surface 6. In a plane of the friction surface 6, the groove 7 has a width 7w and a center line 7c of the width 7w along the friction surface 6. The entire friction surface 6 is defined as the friction surface 6 of the lining material 5 without considering the groove 7. The entire friction surface 6 has a centroid C and the groove 7 is located in a place other than the centroid so that it does not pass through the centroid C. In particular, the groove 7 is displaced from the centroid such that a surface area of the partial friction surface 6' located at an incoming side Sᵢ of the brake disc 2 which is a leading side of the brake pad 3 when the brake disc 2 rotates in the rotating direction R when the vehicle moves in the forward direction is larger than a surface area of the partial friction surface 6" located at an outgoing side Sₒ of the brake disk 2 which is a side opposite to the incoming side Sᵢ in the rotating direction R of the brake disc 2. The groove 7 is provided in a direction perpendicular to a tangential direction of a direction of rotation R of the brake disc 2, therefore, radially to the brake disc 2.

In the cross section, the groove 7 has a V-shape, wherein flanks 7', 7" of the V-shaped groove 7 respectively enclose a different angle with the friction surface 6. In alternative embodiments, the groove 7 has a U-shape, a V-shape having flanks 7', 7" enclosing identical angles with the friction surface 6, a concave shape, or a rectangular shape.

The groove 7 extends up to the back plate 4. In alternative embodiments, the groove 7 does not extend up to the back plate 4 but its depth is smaller than a thickness of the lining material 5.

The cross-section of the groove 7 in a direction along the friction surface 6 is identical. In alternative embodiments, the cross-section of the groove changes in the direction along the friction surface 6.

For braking, the friction surface 6 contacts the rotating brake disc 2 and the groove 7 is provided, along the friction surface 6, in a direction perpendicular to a tangential direction of the direction of rotation R of the brake disc 2. In alternative embodiments, alternatively or additionally, the groove 7 is provided, along the friction surface 6, parallel to the tangential direction of the direction of rotation R of the brake disc 2, the groove 7 encloses, along the friction surface 6, another angle with the tangential direction of rotation of the brake disc 2, or the groove 7 is concentric to the brake disc 2.

In use, the moment M which would cause the taper wear is compensated by a compensation moment M_{comp} caused by different counter forces F₁ and F₂ acting in the respective centroid of the partial friction surfaces 6', 6" of the friction surface 6. The pressure generated on the friction surface 6 by a braking force F is uniform, and, therefore, due to different sizes of the parts 6', 6" of the friction surface 6 different counter forces F₁ and F₂ result.

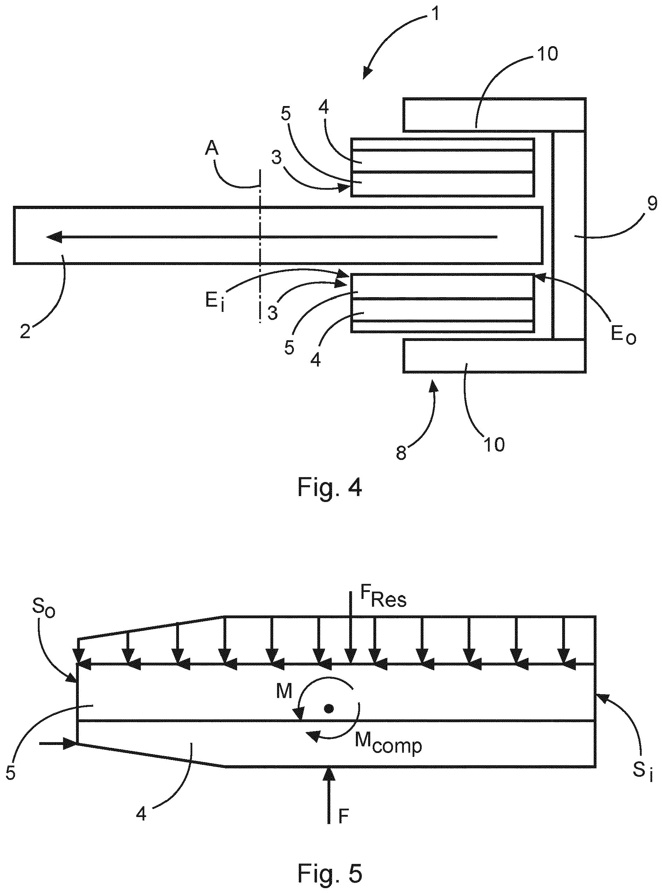

**Fig. 4** shows a principle illustration of a disc brake 1 of a second embodiment and **Fig. 5** shows a principle illustration of a brake pad 3 of a disc brake 1 of the second embodiment.

The disc brake 1 comprises the brake disc 2, two brake pads 3 facing each other and a caliper 8. The brake pads 3 respectively comprise the back plate 4 and the lining material 5. Each brake pad 3 comprises the incoming side Sᵢ, and the outgoing side Sₒ. The caliper 8 and the brake pads 3 are configured such that the brake pads 3 are supported on the caliper 8. In particular, the caliper 8 comprises tension struts 9 connecting a portion 10 of the caliper 8 where one of the two brake pads 3 is supported with another portion 10 of the caliper 8 where the other one of the two brake pads 3 is supported. At least one of the caliper 8 and of the two brake pads 3 is configured to provided its/their deformation during braking such that a point of application of a resulting counterforce F_{Res} from the brake disc 2 to the brake pads 3 is located closer to the incoming side Sᵢ then to the outgoing side Sₒ. The brake pads 3, respectively including the back plate 4 and the lining material 5, and the caliper 8, including the tension struts 9 and the portions 10, are components of a clamping unit.

The back plate 4 has a non-uniform thickness and the thickness towards the outgoing side is smaller than towards the incoming side. Due to this characteristic, the stiffness of the back plate 4 and, therefore, of the brake pad 3 towards the outgoing side Sₒ is smaller than the stiffness of the back plate 4 and, therefore, of the brake pad 3 towards the incoming side Sᵢ. This results in a behavior with a reduced counterforce from the brake disc 2 to the brake pads 3 towards the outgoing side Sₒ which in turn results in a point of application of the resulting counterforce F_{Res} which is located closer to the incoming side Sᵢ than to the outgoing side Sₒ. Due to the location of this point of application of the resulting counterforce F_{Res} closer to the incoming side Sᵢ, the compensation moment M_{comp} is generated and, therefore, the taper wear of the lining material 5 in a tangential direction of the brake disc 2 can be reduced or eliminated.

The brake disc 2 has the axis A and the lining material 5 comprises an inner edge Eᵢ facing the axis A and an outer edge Eₒ averted from the axis A. At least one of the caliper 8 and the two brake pads 3 is configured to provide its/their deformation during braking such that a point of application of the resulting counterforce F_{Res} from the brake disc 2 to the brake pads 3 is located closer to the outer edge Eₒ than to the inner edge Eᵢ. By this characteristic, the taper wear of the lining material 5 in a radial direction of the brake disc 2 can be reduced or eliminated.

In an alternative embodiment, not both of the caliper 8 and the two brake pads 3 are configured to provide their deformation during braking such that a point of application of a resulting counterforce from the brake disc 2 to the brake pads 3 is located closer to the outer edge Eₒ than to the inner edge Eᵢ.

Even though not illustrated in the drawings of this embodiment, the groove 7 of the first embodiment can alternatively be provided in the brake pad 3 of the second embodiment.

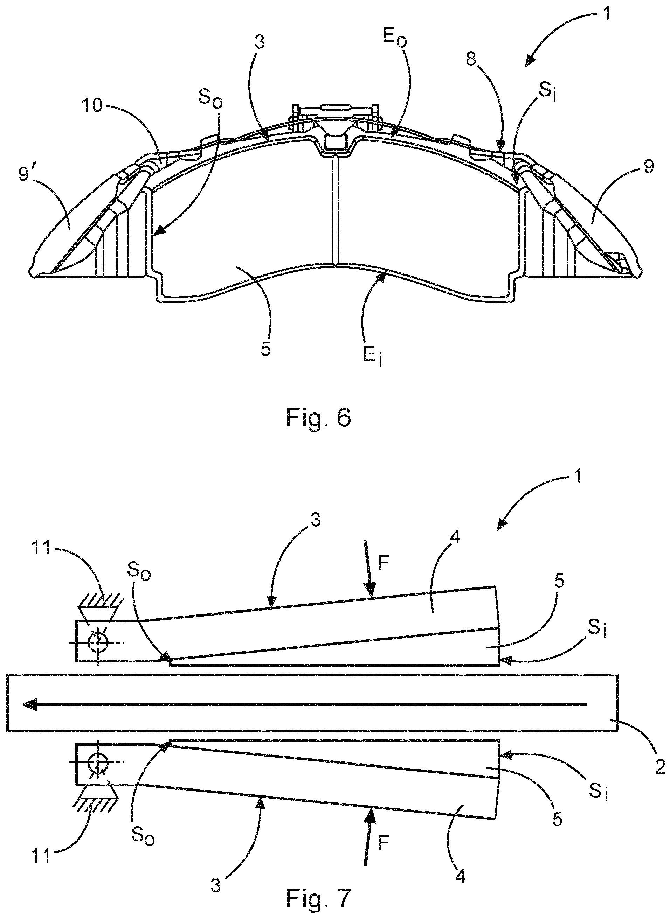

**Fig. 6** shows a cross-sectional view of a disc brake 1 according to a third embodiment, wherein the caliper 8 is cut in a sectional plane including a surface of the brake disc 2 such that tension struts 9 are cut and there is a plan view onto one of the brake pads 3.

The caliper 8 comprises the tension struts 9 connecting the portion 10 of the caliper 8 where one of the two brake pads 3 is supported with the portion of the caliper 8 where the other one of the two brake pads 3 is supported. The portions 10, where the brake pads 3 are supported, and the tension struts 9 are integrally formed as one component such that the portions where the brake pads 3 are supported and, in particular, the tension struts 9 are made of the same material. In alternative embodiments, the caliper 8 is made of several components which are made of different materials.

The tension struts 9 closer to the incoming side Sᵢ of the brake pad 3 has another stiffness than the tension struts 9 closer to the outgoing side Sₒ of the brake pad 3. In particular, in the embodiment with the caliper 8 integrally formed of the same material, a cross-section of the tension strut 9 closer to the incoming side Sᵢ differs from the cross-section of the tension strut 9 closer to the outgoing side Sₒ.

In particular, the stiffness of the tension strut 9 closer to the incoming side Si is larger than the stiffness of the tension strut 9 closer to the outgoing side Sₒ.

By this characteristic, a similar behavior as shown in Fig. 5 is provided. Due to the different stiffness of the tension strut 9 closer to the incoming side Sᵢ with respect to the tension strut 9 closer to the outgoing side Sₒ, in particular, when the stiffness of the tension strut 9 closer to the incoming side Sᵢ is larger than the stiffness of the tension strut 9 closer to the outgoing side Sₒ, a similar displacement of the resulting counterforce F_{Res} is achieved so that the compensation moment M_{comp} is generated and the taper wear is reduced or eliminated.

Also in this embodiment, the lining material 5 comprises an inner edge Eᵢ facing the axis A and an outer edge Eₒ averted from the axis A. The stiffness of the tension struts 9 is distributed such that, of one of the tension struts 9, the stiffness closer to the inner edge is larger than the stiffness closer to the outer edge Eₒ. This is achieved by choosing a shape of the cross-section in an appropriate manner. In order to reduce or eliminate the taper wear in the radial direction, from the inner edge Eᵢ to the outer edge Eₒ, the distribution of the stiffness in each of the tension struts 9 is accordingly set.

In an alternative embodiment, the two brake pads 3 and the caliper 8 are not all configured to provide their deformation during braking such that a point of application of a resulting counterforce from the brake disc 2 to the brake pads 3 is located closer to the outer edge Eₒ than to the inner edge Eᵢ.

Even though not illustrated in the drawings of this embodiment, the groove 7 of the first embodiment can alternatively be provided in the brake pad 3 of the third embodiment.

**Fig. 7** shows a principle illustration of a disc brake 1 according to a fourth embodiment.

The disc brake 1 comprises the brake disc 2, the two brake pads 3 facing each other, wherein the brake pads 3 respectively comprise the back plate 4 and the lining material 5. Each brake pad 3 comprises the incoming side Sᵢ and the outgoing side Sₒ. The lining material 5 has a thickness towards the brake disc 2, which thickness increases from the outgoing side Sₒ to the incoming side Sᵢ. The disc brake 1 further comprises the caliper 8, wherein the caliper 8 and the brake pads 3 are configured such that the brake pads 3 are supported on the caliper 8, and a the caliper 8 is configured to be supported in a rotary manner with respect to a carrier 11 of the vehicle on the carrier. On the outgoing side Sₒ, the back plate 4 of each brake pad 3 is configured to be supported in a rotary manner by the carrier 11.

The back plates 4 comprise components of a fixed bearing to support the back plates 4 in a rotary manner on the carrier 11 by means of the fixed bearings.

In operation, when the brake force F is applied on the brake pads 3, the brake pads 3 rotate about the fixed bearings so that the effect of the taper wear is considered in the wear of the lining materials 5 by the varying thickness of the lining material 5 in order to avoid the problems usually caused by the taper wear. A desired wear distribution can be achieved by a position of the application point of the brake force in an optimal predefined distance to the fixed bearings.

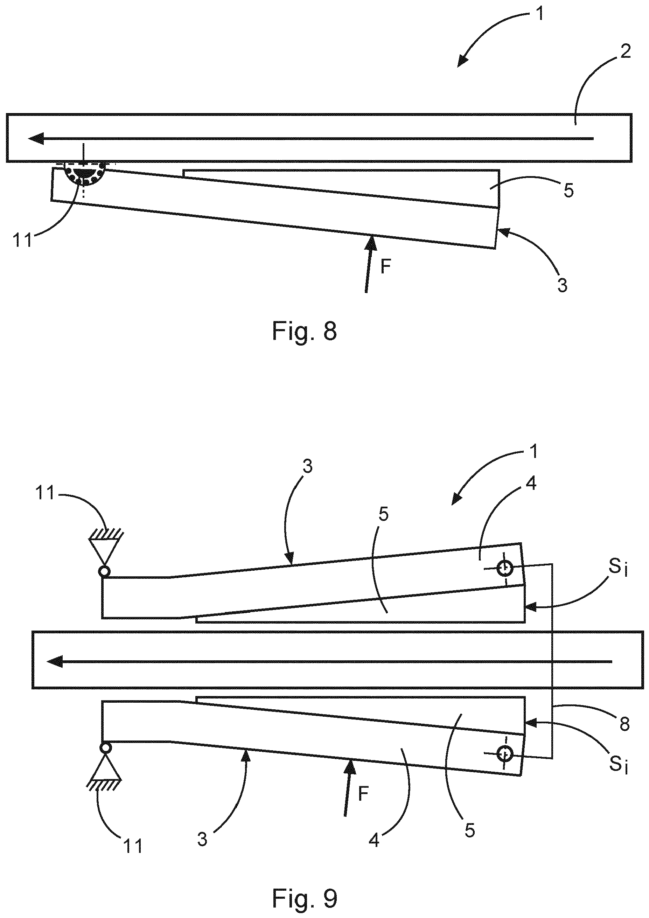

**Fig. 8** shows a principle illustration of an alternative of the disc brake 1 of Fig. 7. Fig. 8 merely shows one brake pad 3, nevertheless, this disc brake 1 comprises two brake pads 3 as shown in Fig. 7.

This disc brake 1 distinguishes from the disc brake 1 in Fig. 7 in the type of the fixed bearings. In this case, the fixed bearings comprise components of a half shell bearing.

By the use of the half shell bearing for supporting the brake pad 3 on the carrier 11, which is possible due to a small rotation angle of the brake pad 3 with respect to the carrier 11, a rotation point can be closer to the brake disc 2 which allows a more compact design and a better usage of the lining material 5. Moreover, the assembly is facilitated.

Even though not illustrated in the drawings of this embodiment, the groove 7 of the first embodiment can alternatively be provided in the brake pad 3 of the fourth embodiment.

**Fig. 9** shows a principle illustration of a disc brake 1 according to a fifth embodiment.

The disc brake 1 according to the fifth embodiment distinguishes from the disc brake 1 of Fig. 7 in that the back plates 4 are not supported on the carrier 11 by fixed bearings but by loose bearings on the outgoing side Sₒ of the brake pads. Therefore, the back plates 4 and the carrier 11 respectively comprise components of the loose bearings to support the back plates 4 on the carrier 11.

Moreover, on the incoming side Sᵢ of the brake pads 3, the back plate 4 and the caliper 8, illustrated by a bracket, respectively comprise components of a fixed bearing to support the back plate 4 by the caliper 8.

Even though not illustrated in the drawings of this embodiment, the groove 7 of the first embodiment can alternatively be provided in the brake pad 3 of the fifth embodiment.

In operation, the effect of the considered taper wear is enabled by the fixed bearings on the incoming side Sᵢ about which the brake pads 3 can rotate and the rotatable caliper 8. Further, in order to enable a defined wear of the lining materials 5, the brake pads 3 are supported on the carrier 11 by means of the loose bearings. The position of the application point of the brake force F can be defined in an optimal predefined distance to the fixed bearings.

While the invention has been illustrated and described in detail in the drawings and the foregoing description, such illustration and description are to be considered illustrative or exemplary and not restrictive. The invention defined in the claims is not limited to the disclosed embodiments. From reading the present disclosure, other modifications will be apparent to a person skilled in the art. Such modifications may involve other features, which are already known in the art and may be used instead of or in addition to features already described herein, which, in particular, can be combined. In the claims, the word "comprising" does not exclude other elements or steps, and the indefinite article "a" or "an" does not exclude a plurality.

### LIST OF REFERENCE SIGNS

- 1: disc brake
- 2: brake disc
- 3: brake pad
- 4: back plate
- 5: lining material
- 6: friction surface
- 6', 6": partial friction surface
- 7: groove
- 7', 7": flank (of groove)
- 7w: width of groove
- 7c: center line of width of groove
- 8: caliper
- 9: tension strut
- 10: portion (of caliper)
- 11: carrier
- A: axis
- Eᵢ: inner edge
- Eₒ: outer edge
- F: brake force
- F_{R}: friction force
- F₁, F₂: force
- M: moment (caused by friction force)
- M_{comp}: compensation moment
- R: direction of rotation
- Sᵢ: incoming side
- Sₒ: outgoing side

## Claims

1. A disc brake (1), in particular for a vehicle, the disc brake (1) comprising
a brake disc (2),
two brake pads (3) facing each other, the brake pads (3) respectively comprising a back plate (4) and a lining material (5), each brake pad (3) comprising an incoming side (Sᵢ) which is a leading side of the brake pad (3) when the brake disc (2) rotates in the rotating direction (R) when the vehicle moves in the forward direction and an outgoing side (Sₒ) which is a side opposite to the incoming side Sᵢ in the rotating direction (R) of the brake disc (2), and
a clamping unit comprising the brake pads (3) and a caliper (8) comprising tension struts (9) connecting a portion (10), where one of the two brake pads (3) is supported, with another portion (10), where the other one of the two brake pads (3) is supported, wherein
at least one of the tensions struts (9), of the portions (10), and of the two brake pads (3) is configured to provide its/their deformation during braking such that a point of application of a resulting counterforce (F_{Res}) from the brake disc (2) to the brake pads (3) is located closer to the incoming side (Sᵢ) than to the outgoing side (Sₒ).

2. The disc brake (1) of claim 1, wherein
the brake disc (1) has an axis (A), and the lining material (5) comprises an inner edge (Eᵢ) facing the axis (A) and an outer edge (Eₒ) averted from the axis (A), and
at least one of the two brake pads (3) and the caliper (8) is configured to provide its/their deformation during braking such that a point of application of a resulting counterforce (F_{Res}) from the brake disc (2) to the brake pads (3) is located closer to the outer edge (Eₒ) than to the inner edge (Eᵢ).

3. The disc brake (1) of claim 1 or 2, wherein
the back plate (4) has a non-uniform thickness and the thickness towards the outgoing side (Sₒ) is smaller than towards the incoming side (Sᵢ).

4. The disc brake (1) of anyone of the claims 1 to 3, wherein
the tension strut (9) closer to the incoming side (Sᵢ) has another stiffness than the tension strut (9) closer to the outgoing side (Sₒ).

5. The disc brake (1) of claim 4, wherein
the tension struts (9) are made of the same material, and a cross section of the tension strut (9) closer to the incoming side (Sᵢ) differs from the cross section of the tension strut (9) closer to the outgoing side (Sₒ).

6. The disc brake (1) of claim 4 or 5, wherein
the stiffness of the tension strut (9) closer to the incoming side (Sᵢ) is larger than the stiffness of the tension strut (9) closer to the outgoing side (Sₒ).

7. The disc brake (1) of anyone of claims 4 to 6, wherein
the brake disc (2) has an axis (A), and the lining material (5) comprises an inner edge (Eᵢ) facing the axis (A) and an outer edge (Eₒ) averted from the axis (A),
the stiffness of the respective tension strut (9) is distributed such that the stiffness closer to the inner edge (Eᵢ) is larger than the stiffness of the respective tension strut (9) closer to the outer edge (Eₒ).

8. The disc brake (1) of anyone of the preceding claims, wherein
a friction surface (6) of the lining material (5) is configured to apply a friction force (F_{R}) to the rotating brake disc (2), the lining material (5) comprises a groove (7) in the friction surface (6) extending towards the back plate (4) and, in a plane of the friction surface (6), having a width (7w) and a center line (7c) of the width (7w) of the groove (7), and the entire friction surface (6) has a centroid (C),
wherein the center line (7c) of the width (7w) of the groove (7) is located in places other than the centroid (C).

9. The disc brake (1) of claim 8, wherein
for braking, the friction surface (6) is configured to contact the rotating brake disc (2), and
the groove (7) is provided in a direction perpendicular to a tangential direction of the direction of rotation (R) of the brake disc (2).

10. The disc brake (1) of claim 8 or 9, wherein
for braking, the friction surface (6) is configured to contact the rotating brake disc (2), and
the groove is provided in a direction parallel to a tangential direction of the direction of rotation (R) of the brake disc (2).

11. The disc brake (1) of anyone of claims 8 to 10, wherein
the groove (7) has a cross section of one of a concave shape and a rectangular shape, in particular, of a U-shape and a V-shape.

12. The disc brake (1) of claim 11, wherein flanks (7', 7") of the V-shaped groove respectively enclose a different angle with the friction surface.

13. The disc brake (1) of anyone of claims 8 to 12, wherein
the groove (7) extends up to the back plate (4).

14. The disc brake (1) of anyone of claims 8 to 13, wherein
the cross section of the groove (7) changes in a direction along the friction surface (6).
